# EUROPEAN PATENT APPLICATION

(11) **EP 4 517 969 A1**
(43) Date of publication of application: **05.03.2025**
(21) Application number: 23209459.9
(22) Date of filing: 13.11.2023
(51) Int. Cl.: H01M 50/24, H01M 50/247, H01M 50/287, H01M 50/543

(54) **WATERPROOF STRUCTURE OF BATTERY PACK INTERFACE AND BATTERY PACK**

(30) Priority: 30.08.2023 CN 202322354008 U
(71) Applicant: Shanghai Baicheng Electric Equipment Manufacture Co. Ltd., Shanghai 201806 (CN)
(72) Inventor: ZHAO, Xianguo, Shanghai, 201806 (CN); XIN, Chao, Shanghai, 201806 (CN); ZHOU, Liangliang, Shanghai, 201806 (CN)
(74) Representative: Wallinger Ricker Schlotter Tostmann

(57) **Abstract**

Provided are a waterproof structure of a battery pack interface and a battery pack. The waterproof structure includes a housing, a support plate (20), and an interface assembly (30). The housing includes an upper housing (10) and a lower housing. The side of the upper housing (10) facing the lower housing is formed with a receiving groove (11). The bottom of the receiving groove (11) is formed with a open slot (12). The interface assembly (30) includes a terminal block (31) and a metal terminal (32). A first sealing member (33) sleeves on the periphery of the terminal block (31). The terminal block (31) is interposed between the support plate (20) and the upper housing (10).

## Description

### TECHNICAL FIELD

The present disclosure relates to the field of battery pack technology and, in particular, to a waterproof structure of a battery pack interface and a battery pack.

### BACKGROUND

A battery pack, as an external power supply of a power tool, contains batteries and other electronic elements inside.

In use, terminals of the battery pack are main components for connecting the power tool and the batteries. Commonly, the battery pack is formed with a bypass port. The interface end of the power tool extends into the bypass port and is connected to one end of a terminal, and the other end of the terminal is electrically connected to a battery.

Due to the design of the bypass port, the terminals are in direct contact with the environment outside a housing. When the ambient humidity is high, water vapor or liquid easily enters the battery pack through the bypass port and flows to the batteries along the terminals. As a result, the batteries are corroded by liquid, or a short circuit is caused.

### SUMMARY

The present disclosure provides a waterproof structure of a battery pack interface and a battery pack, which can avoid corrosion or a short circuit inside the battery pack caused by contact with water vapor or liquid.

The present disclosure adopts the solutions described below.

The waterproof structure of a battery pack interface includes a housing, a support plate, and an interface assembly.

The housing includes an upper housing and a lower housing. The side of the upper housing facing the lower housing is formed with a receiving groove. The bottom of the receiving groove is formed with a open slot.

The support plate is configured to be located between the upper housing and an internal core battery and fixed to the lower housing.

The interface assembly includes a terminal block and a metal terminal. A first sealing member sleeves on a periphery of the terminal block. The terminal block is interposed between the support plate and the upper housing. The upper end surface of the first sealing member abuts against the end surface of a peripheral sidewall of the receiving groove. The lower end surface of the first sealing member abuts against the support plate. The metal terminal is inserted into the terminal block and is located in the receiving groove.

A battery pack is also provided. The battery pack includes a core battery and the preceding waterproof structure of a battery pack interface. The core battery is fixed to the lower housing. The support plate is laid between the core battery and the upper housing. The connector of the metal terminal extends through the support plate and is electrically connected to the core battery.

### BRIEF DESCRIPTION OF DRAWINGS

Drawings used in description of the embodiments of the present disclosure are briefly described below. Apparently, the drawings described below illustrate only part of the embodiments of the present disclosure, and those of ordinary skill in the art may obtain other drawings based on the content and drawings described below on the premise that no creative work is done.
FIG. 1 is a view illustrating the structure of an upper housing according to embodiments of the present disclosure.
FIG. 2 is an assembly view of the upper housing and a support plate according to embodiments of the present disclosure.
FIG. 3 is a section view of a waterproof structure of a battery pack interface according to embodiments of the present disclosure.
FIG. 4 is a view illustrating the structure of an interface assembly according to embodiments of the present disclosure.
FIG. 5 is a rear view of a support plate according to embodiment one of the present disclosure.
FIG. 6 is a rear view of an interface assembly according to embodiment one of the present disclosure.
FIG. 7 is a view illustrating the structure of a metal terminal according to embodiment one of the present disclosure.
FIG. 8 is a rear view of a support plate according to embodiment two of the present disclosure.
FIG. 9 is a rear view of an interface assembly according to embodiment two of the present disclosure.

### Reference list

- 10: upper housing
- 11: receiving groove
- 12: open slot
- 20: support plate
- 21: glue injection hole
- 22: observation hole
- 23: positioning hole
- 30: interface assembly
- 31: terminal block
- 311: accommodation groove
- 312: second sealing member
- 313: positioning column
- 314: sealing groove
- 32: metal terminal
- 321: clamping piece
- 322: connector
- 33: first sealing member

### DETAILED DESCRIPTION

The present disclosure is further described below in detail in conjunction with drawings and embodiments. It is to be understood that the embodiments set forth below are intended to merely illustrate and not to limit the present disclosure. In addition, it is to be noted that for ease of description, only a part, not all, related to the present disclosure is illustrated in the drawings.

In the description of the present utility mode, unless otherwise expressly specified and limited, the term "connected to each other", "connected", or "fixed" is to be construed in a broad sense, for example, as permanently connected, detachably connected, or integrated; mechanically connected, or electrically connected; directly connected to each other or indirectly connected to each other via an intermediary; or internally connected or interactional between two components. For those of ordinary skill in the art, specific meanings of the preceding terms in the present disclosure may be understood based on specific situations.

In the present disclosure, unless otherwise expressly specified and limited, when a first feature is described as "on" or "below" a second feature, the first feature and the second feature may be in direct contact, or be in contact via another feature between the two features instead of being in direct contact. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below", or "underneath" the second feature, the first feature is right under, below, or underneath the second feature or the first feature is obliquely under, below, or underneath the second feature, or the first feature is simply at a lower level than the second feature.

In the description of the embodiments, orientations or position relations indicated by terms such as "above", "below", "left" and "right" are based on the drawings. These orientations or position relations are intended only to facilitate the description and simplify an operation and not to indicate or imply that a device or element referred to must have such particular orientations or must be configured or operated in such particular orientations. Thus, these orientations or position relations are not to be construed as limiting the present disclosure. In addition, the terms "first" and "second" are used only to distinguish between descriptions and have no special meaning.

### Embodiment one

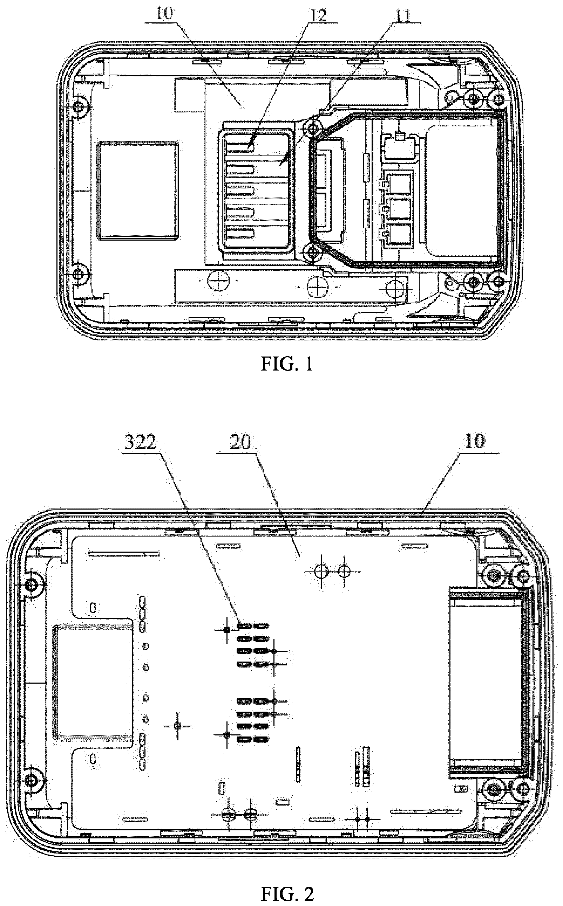

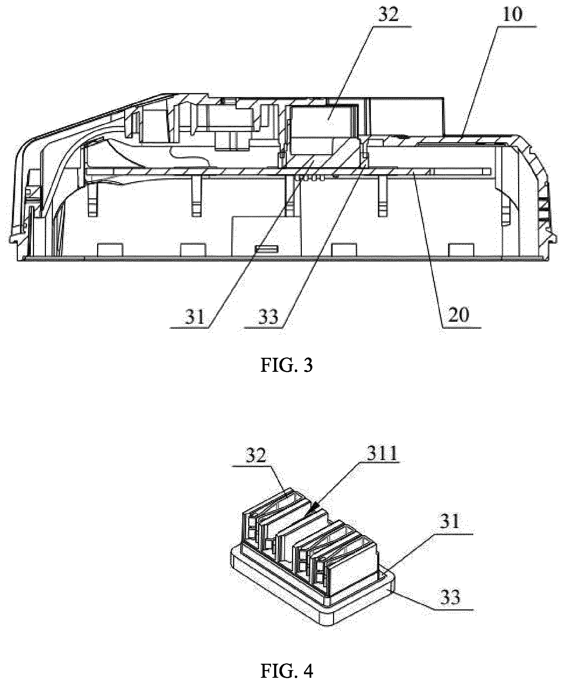

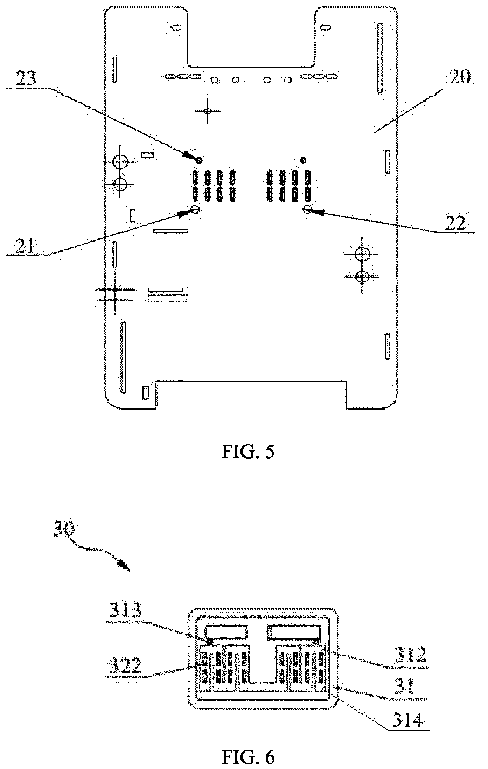

As shown in FIGS. 1 to 7, the present disclosure provides a waterproof structure of a battery pack interface. The waterproof structure includes a housing, a support plate 20, and an interface assembly 30. The housing includes an upper housing 10 and a lower housing. The side of the upper housing 10 facing the lower housing is formed with a receiving groove 11. The bottom of the receiving groove 11 is formed with a open slot 12. The support plate 20 is located between the upper housing 10 and an internal core battery, and fixed to the lower housing. The interface assembly 30 includes a terminal block 31 and a metal terminal 32. A first sealing member 33 sleeves on the periphery of the terminal block 31. The terminal block 31 is interposed between the support plate 20 and the upper housing 10. The upper end surface of the first sealing member 33 abuts against the end surface of the peripheral sidewall of the receiving groove 11. The lower end surface of the first sealing member 33 abuts against the support plate 20. The metal terminal 32 is inserted into the terminal block 31 and is located in the receiving groove 11. The metal terminal 32 is disposed in a one-to-one correspondence with the open slot 12.

Optionally, the support plate 20 is fastened to part of the upper housing 10, and the opening on the side of the receiving groove 11 facing the lower housing is blocked, so that the receiving groove 11 forms an independent space relative to the inside of the battery pack. The receiving groove 11 can communicate with the environment outside the housing through the open slot 12. The interface assembly 30 is mounted in the receiving groove 11. The terminal block 31 is fixed to one of the support plate 20 or the upper housing 10. The metal terminal 32 is inserted into the terminal block 31. One end of the metal terminal 32 is configured to be connected to an electric workpiece, and the other end is connected to the core battery in the battery pack. When the battery pack is used, the interface end of the electric workpiece extends into the receiving groove 11 from the open slot 12 and is electrically connected to the metal terminal 32, that is, in use, the open slot 12 is blocked by the electric workpiece and is filled with the interface end of the electric workpiece. In this manner, the receiving groove 11 forms a relatively closed cavity, and external water vapor or liquid cannot enter the receiving groove 11.

Commonly, a movable member such as an interface terminal of a power tool is inserted into the housing, so that water vapor or liquid in the environment outside the housing can enter the battery pack from a gap between the movable member and the housing. The first sealing member 33 seals the upper housing 10 and the support plate 20, so that the receiving groove 11 is relatively independent from other space in the battery pack, and the internal space is sealed, thereby avoiding corrosion or a short circuit inside the battery pack caused by contact with water vapor or liquid.

Further, when the first sealing member 33 is interposed between the upper housing 10 and the support plate 20, and the end surface of the peripheral sidewall of the receiving groove 11 presses against the first sealing member 33, the first sealing member 33 can also further abut against the support plate 20, so that the sealing relation is more reliable.

Optionally, the upper end surface of the terminal block 31 is formed with an accommodation groove 311. The lower end surface of the terminal block 31 is formed with a sealing groove 314. One end of the metal terminal 32 is provided with a clamping piece 321, and the other end of the metal terminal 32 is formed with a connector 322. The clamping piece 321 is placed in the accommodation groove 311. The connector 322 extends through the bottom of the accommodation groove 311 and extends out of the sealing groove 314. A second sealing member 312 is disposed in the sealing groove 314. With this disposition, the gap between the metal terminal 32 and the terminal block 31 is filled by the second sealing member 312, so that the water vapor or liquid entering from the open slot 12 can be blocked in the receiving groove 11 to prevent the water vapor or liquid from further flowing to the side where the core battery is located.

Optionally, multiple metal terminals 32 are inserted into the terminal block 31. The sealing groove 314 is connected to connectors 322 of all the metal terminals 32.

Optionally, the second sealing member 312 is a silicone sealant. The support plate 20 is formed with a glue injection hole 21 and an observation hole 22. The silicone sealant enters the sealing groove 314 from the glue injection hole 21, and the silicone sealant can partially overflow the sealing groove 314 from the observation hole 22. During assembly, first, the metal terminal 32 is inserted into the terminal block 31. Then, the lower end surface of the terminal block 31 is pressed against the support plate 20. The glue injection hole 21 and the observation hole 22 of the support plate 20 communicate with the sealing groove 314. When the silicone sealant is poured into the sealing groove 314 from the glue injection hole 21, and the fluidic silicone sealant fills the sealing groove 314, the gap between the metal terminal 32 and the sealing groove 314 is filled up. The terminal block 31 is bonded to the support plate 20, and the excess silicone sealant overflows the sealing groove 314 from the observation hole 22. At this time, the injection of glue from the glue injection hole 21 into the sealing groove 314 is stopped. Thus, that is, filling the gap between the metal terminal 32 and the terminal block 31 is completed, so that water vapor or liquid cannot flow along the metal terminal 32 from the side where the clamping piece 321 is located to the side where the connector 322 is located, thereby avoiding the short circuit connection between connectors 322. At the same time, the terminal block 31 is fixed to the support plate 20.

Optionally, a positioning column 313 is protruded on the terminal block 31. The support plate 20 is formed with a positioning hole 23 corresponding to the positioning column 313. The positioning column 313 is inserted into the positioning hole 23. With this disposition, the positioning column 313 is inserted into the positioning hole 23 and cooperates with the positioning hole 23, which can not only serve a fool-proofing function when the terminal block 31 and the support plate 20 are assembled so as to improve the assembly efficiency; but also secure the terminal block 31 to the support plate 20 so as to simplify the stop structure.

Optionally, the first sealing member 33 has an interference fit with the terminal block 31. With this disposition, when the upper housing 10 and the support plate 20 clamp the first sealing member 33, the terminal block 31 is fixed accordingly. The interference fit can also prevent a gap from easily occurring between the first sealing member 33 and the terminal block 31.

Optionally, the one side interference amount between the first sealing member 33 and the terminal block 31 ranges from 0.3 mm to 2 mm.

Optionally, the first sealing member 33 is made of rubber.

A battery pack is also provided. The battery pack includes a core battery and the preceding waterproof structure of a battery pack interface. The core battery is fixed to the lower housing. The support plate 20 is laid between the core battery and the upper housing 10. The connector 322 of the metal terminal 32 extends through the support plate 20 and is electrically connected to the core battery.

### Embodiment two

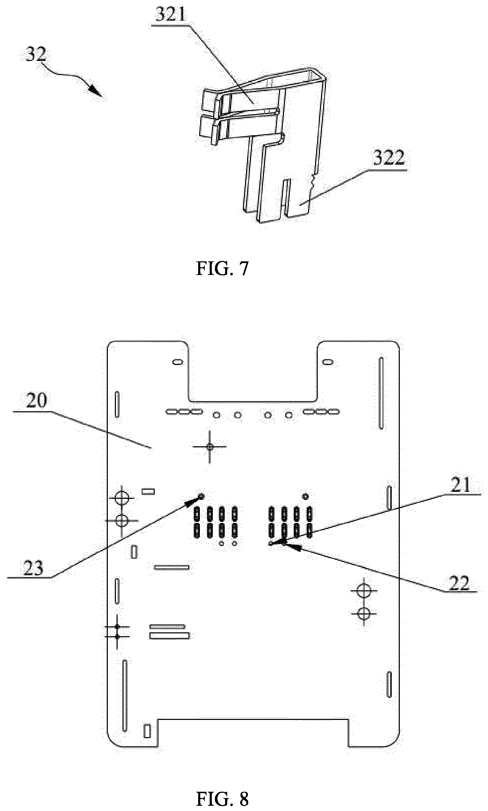

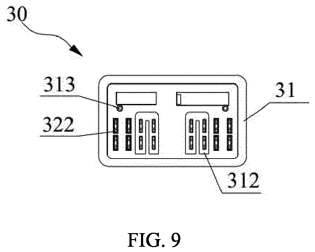

As shown in FIGS. 8 and 9, multiple metal terminals 32 are inserted into the terminal block 31. The lower end surface of the terminal block 31 is formed with multiple sealing grooves 314. The multiple sealing grooves 314 correspond to connectors 322 of the multiple metal terminals 32 in a one-to-one manner. Adaptively, each sealing groove 314 is formed with a corresponding observation hole 22 and a corresponding glue injection hole 21.

The present disclosure provides a waterproof structure of a battery pack interface. The waterproof structure includes a housing, a support plate, and an interface assembly. The housing includes an upper housing and a lower housing. The side of the upper housing facing the lower housing is formed with the receiving groove. The bottom of the receiving groove is formed with the open slot. The interface assembly includes a terminal block and a metal terminal. The first sealing member sleeves on the periphery of the terminal block. The terminal block is interposed between the support plate and the upper housing. The upper end surface of the first sealing member abuts against the end surface of the peripheral sidewall of the receiving groove. The lower end surface of the first sealing member abuts against the support plate. The metal terminal is inserted into the terminal block and is located in the receiving groove. The metal terminal is disposed in a one-to-one correspondence with the open slot. The support plate is fastened to part of the upper housing to block the opening on the side of the receiving groove facing the lower housing, so that the receiving groove forms an independent space relative to the inside of the battery pack. The receiving groove can communicate with the environment outside the housing through the open slot. The interface assembly is mounted in the receiving groove. The terminal block is fixed to one of the support plate or the upper housing. The metal terminal is inserted into the terminal block. One end of the metal terminal is configured to be connected to an electric workpiece, and the other end is connected to the core battery in the battery pack. When the battery pack is used, the interface end of the electric workpiece extends into the receiving groove from the open slot and is electrically connected to the metal terminal, that is, in use, the open slot is blocked by the electric workpiece and is filled with the interface end of the electric workpiece. In this manner, the receiving groove forms a relatively closed cavity, and external water vapor or liquid cannot splash into the receiving groove. The first sealing member seals the upper housing and the support plate, so that the receiving groove is relatively independent from other space in the battery pack, and the internal space is sealed, thereby avoiding corrosion or a short circuit inside the battery pack caused by contact with water vapor or liquid.

## Claims

1. A waterproof structure of a battery pack interface, comprising:
a housing comprising an upper housing (10) and a lower housing, wherein a side of the upper housing (10) facing the lower housing is formed with a receiving groove (11), and a bottom of the receiving groove (11) is formed with a open slot (12);
a support plate (20) configured to be located between the upper housing (10) and an internal core battery, and fixed to the lower housing; and
an interface assembly (30) comprising a terminal block (31) and a metal terminal (32), wherein a first sealing member (33) sleeves on a periphery of the terminal block (31), the terminal block (31) is interposed between the support plate (20) and the upper housing (10), an upper end surface of the first sealing member (33) abuts against an end surface of a peripheral sidewall of the receiving groove (11), a lower end surface of the first sealing member (33) abuts against the support plate (20), the metal terminal (32) is inserted into the terminal block (31) and is located in the receiving groove (11).

2. The waterproof structure of the battery pack interface according to claim 1, wherein an upper end surface of the terminal block (31) is formed with an accommodation groove (311), a lower end surface of the terminal block (31) is formed with a sealing groove (314), one end of the metal terminal (32) is provided with a clamping piece (321), another end of the metal terminal (32) is formed with a connector (322), the clamping piece (321) is placed in the accommodation groove (311), the connector (322) extends through a bottom of the accommodation groove (311) and extends out of the sealing groove (314), and a second sealing member (312) is disposed in the sealing groove (314).

3. The waterproof structure of the battery pack interface according to claim 2, wherein the bottom of the receiving groove (11) is formed with a plurality of open slots (12), the interface assembly (30) comprises a plurality of metal terminals (32), and the plurality of metal terminals (32) are arranged in a one-to-one correspondence with the plurality of open slots (12);
the plurality of metal terminals (32) are inserted into the terminal block (31), and the sealing groove (314) is connected to connectors (322) of all the metal terminals (32).

4. The waterproof structure of the battery pack interface according to claim 2, wherein the bottom of the receiving groove (11) is formed with a plurality of open slots (12), the interface assembly (30) comprises a plurality of metal terminals (32), and the plurality of metal terminals (32) are arranged in a one-to-one correspondence with the plurality of open slots (12);
the plurality of metal terminals (32) are inserted into the terminal block (31), the lower end surface of the terminal block (31) is formed with a plurality of sealing grooves (314), and the plurality of sealing grooves (314) correspond to connectors (322) of the plurality of metal terminals (32) in a one-to-one manner.

5. The waterproof structure of the battery pack interface according to claim 2, wherein the second sealing member (312) is a silicone sealant, the support plate (20) is formed with a glue injection hole (21) and an observation hole (22), and the silicone sealant enters the sealing groove (314) from the glue injection hole (21), and is capable of partially overflowing the sealing groove (314) from the observation hole (22).

6. The waterproof structure of the battery pack interface according to claim 5, wherein a positioning column (313) is protruded on the terminal block (31), the support plate (20) is formed with a positioning hole (23) corresponding to the positioning column (313), and the positioning column (313) is inserted into the positioning hole (23).

7. The waterproof structure of the battery pack interface according to claim 1, wherein the first sealing member (33) has an interference fit with the terminal block (31).

8. The waterproof structure of the battery pack interface according to claim 7, wherein an one side interference amount between the first sealing member (33) and the terminal block (31) ranges from 0.3 mm to 2 mm.

9. The waterproof structure of the battery pack interface according to any one of claims 1 to 8, wherein the first sealing member (33) is made of rubber.

10. The waterproof structure of the battery pack interface according to claim 1, the bottom of the receiving groove (11) is formed with a plurality of open slots (12), the interface assembly (30) comprises a plurality of metal terminals (32), and the plurality of metal terminals (32) are arranged in a one-to-one correspondence with the plurality of open slots (12).

11. A battery pack, comprising a core battery and the waterproof structure of the battery pack interface according to any one of claims 1 to 10, wherein the core battery is fixed to the lower housing, the support plate (20) is laid between the core battery and the upper housing (10), and a connector (322) of the metal terminal (32) extends through the support plate (20) and is electrically connected to the core battery.

## Amended claims

### Amended claims in accordance with Rule 137(2) EPC.

1. A waterproof structure of a battery pack interface, comprising:
a housing comprising an upper housing (10) and a lower housing, wherein a side of the upper housing (10) facing the lower housing is formed with a receiving groove (11), and a bottom of the receiving groove (11) is formed with a open slot (12);
a support plate (20) configured to be located between the upper housing (10) and an internal core battery, and fixed to the lower housing; and
an interface assembly (30) comprising a terminal block (31) and a metal terminal (32), wherein a first sealing member (33) sleeves on a periphery of the terminal block (31), the terminal block (31) is interposed between the support plate (20) and the upper housing (10), an upper end surface of the first sealing member (33) abuts against an end surface of a peripheral sidewall of the receiving groove (11), a lower end surface of the first sealing member (33) abuts against the support plate (20), the metal terminal (32) is inserted into the terminal block (31) and is located in the receiving groove (11), **characterized in that**
an upper end surface of the terminal block (31) is formed with an accommodation groove (311), a lower end surface of the terminal block (31) is formed with a sealing groove (314), one end of the metal terminal (32) is provided with a clamping piece (321), another end of the metal terminal (32) is formed with a connector (322), the clamping piece (321) is placed in the accommodation groove (311), the connector (322) extends through a bottom of the accommodation groove (311) and extends out of the sealing groove (314), and a second sealing member (312) is disposed in the sealing groove (314); and that
the connector (322) of the metal terminal (32) extends through the support plate (20) and is configured to electrically connected to the core battery.

2. The waterproof structure of the battery pack interface according to claim 1, wherein the bottom of the receiving groove (11) is formed with a plurality of open slots (12), the interface assembly (30) comprises a plurality of metal terminals (32), and the plurality of metal terminals (32) is arranged in a one-to-one correspondence with the plurality of open slots (12);
the plurality of metal terminals (32) is inserted into the terminal block (31), and the sealing groove (314) is connected to connectors (322) of all the metal terminals (32).

3. The waterproof structure of the battery pack interface according to claim 1, wherein the bottom of the receiving groove (11) is formed with a plurality of open slots (12), the interface assembly (30) comprises a plurality of metal terminals (32), and the plurality of metal terminals (32) are arranged in a one-to-one correspondence with the plurality of open slots (12);
the plurality of metal terminals (32) is inserted into the terminal block (31), the lower end surface of the terminal block (31) is formed with a plurality of sealing grooves (314), and the plurality of sealing grooves (314) corresponds to connectors (322) of the plurality of metal terminals (32) in a one-to-one manner.

4. The waterproof structure of the battery pack interface according to claim 1, wherein the second sealing member (312) is a silicone sealant, the support plate (20) is formed with a glue injection hole (21) and an observation hole (22), and the silicone sealant enters the sealing groove (314) from the glue injection hole (21), and is capable of partially overflowing the sealing groove (314) from the observation hole (22).

5. The waterproof structure of the battery pack interface according to claim 4, wherein a positioning column (313) is protruded on the terminal block (31), the support plate (20) is formed with a positioning hole (23) corresponding to the positioning column (313), and the positioning column (313) is inserted into the positioning hole (23).

6. The waterproof structure of the battery pack interface according to claim 1, wherein the first sealing member (33) has an interference fit with the terminal block (31).

7. The waterproof structure of the battery pack interface according to claim 6, wherein an one side interference amount between the first sealing member (33) and the terminal block (31) ranges from 0.3 mm to 2 mm.

8. The waterproof structure of the battery pack interface according to any one of claims 1 to 7, wherein the first sealing member (33) is made of rubber.

9. The waterproof structure of the battery pack interface according to claim 1, the bottom of the receiving groove (11) is formed with a plurality of open slots (12), the interface assembly (30) comprises a plurality of metal terminals (32), and the plurality of metal terminals (32) are arranged in a one-to-one correspondence with the plurality of open slots (12).

10. A battery pack, comprising a core battery and the waterproof structure of the battery pack interface according to any one of claims 1 to 9, wherein the core battery is fixed to the lower housing, the support plate (20) is laid between the core battery and the upper housing (10), and a connector (322) of the metal terminal (32) extends through the support plate (20) and is electrically connected to the core battery.
